# EUROPEAN PATENT SPECIFICATION

(11) **EP 1 771 295 B1**
(45) Date of publication and mention of the grant of the patent: **24.09.2008**
(21) Application number: 05749515.2
(22) Date of filing: 02.06.2005
(51) Int. Cl.: B29D 30/24

(54) **TYRE DRUM ASSEMBLY INCLUDING TURN-UP MECHANISMS FOR BUILDING AN UNVULCANIZED TYRE**
REIFENTROMMELANORDNUNG MIT UMSCHLAGMECHANISMEN ZUM BAU EINES UNVULKANISIERTEN REIFENS
ENSEMBLE TAMBOUR POUR PNEU COMPORTANT UN MECANISME DE RETOURNEMENT POUR LA FABRICATION D'UN PNEU NON VULCANISE

(30) Priority: 04.06.2004 NL 1026334
(43) Date of publication of application: 11.04.2007
(73) Proprietor: VMI EPE HOLLAND B.V., 8161 RK Epe (NL)
(72) Inventor: SLOTS, Antonie, NL-8111 RS Heeten (NL); GROLLEMAN, Henk-Jan, NL-6961 VC Eerbeek (NL)
(74) Representative: De Hoop, Eric
(86) International application number: PCT/NL2005/000402
(87) International publication number: WO 2005/118270

(56) References cited:
- EP-A- 0 459 728
- EP-A- 0 468 580
- EP-A- 1 145 834
- WO-A-98/52740
- GB-A- 1 182 061
- US-A- 4 229 246
- US-A- 5 273 612
- US-A1- 2002 104 620

## Description

The invention relates to a tyre drum assembly including a turn-up mechanism for use in building an unvulcanized tyre having tyre components of rubber, particularly also with reinforcement cords and two beads which either may or may not be provided with an apex or bead filling strip.

A known tyre drum is provided with a central shaft, two spaced apart ring segments placed around the shaft for supporting the bead cores and means for radially expanding the part of the tyre components that is situated within the ring segments. On either side outside of the ring segments the tyre drum is provided with a set of axially extending arms, each arm at a first free end oriented towards the ring segment being provided with a first turn-up means, particularly a turn-up roller, and at an opposite second end being hinged to an axially shiftable arm support. Near the first end each arm is provided with rollers or bands.

In the initial position the rollers form a circumferential series of support surfaces for the tyre components. For the turn-up process the second ends of both sets of arms are axially moved towards each other using means for shifting the arm supports. Because simultaneously the part of the tyre components situated within the ring segments is expanded the arms will be subjected to a tilting movement in radial planes to a tilting position, as a result of which the first ends move axially and radially while pressing the part of the tyre components situated outside of the ring segments against the expanded part of the tyre components situated within the ring segments.

Such tyre drums provided with a turn-up mechanism are generally known, among others from International patent application WO 98/52740. They may be designed as tyre building drum on which the tyre components, in particular liner and carcass layers are supplied and of which a cylindrical casing is being made, and also bead cores are supplied, after which the cylindrical casing on the tyre building drum is expanded into a shaped torus shape, in which the sides of the casing are turned up about the bead (cores) by means of the turn-up mechanism. They may also be designed as a shaping drum, to which an already formed cylindrical carcass casing has been supplied.

The known tyre drums usually comprise a hollow shaft in which a spindle is situated having a left-handed and right-handed thread. Two nuts have been arranged thereon. Two drum halves have been slidably arranged on the hollow shaft, which drum halves form a movable unity with the respective nut on the spindle. Rotation of the spindle shaft thus ensures axial sliding of the drum halves, towards each other and away from each other, respectively.

Each drum half comprises a turn-up/forming section including the said arms and a bead clamp section having a cone ring axially slidable within the drum half and a circumferential series of bead clamps (for instance twenty-four) which due to the sliding of the cone ring can be moved radially to the outside in order to thus clamp the bead by biassing radially outwards. Each drum half furthermore comprises a bead support section, for offering counter forces against the axial forces exerted by the arms during the turn-up process, which bead support section comprises a circumferential series of levers (for instance twenty-four) that are able to hinge between a lying inoperative position that is rotated out of the way to the centre plane of the drum, and a substantially upright extended operative position.

Tyres of various dimensions are made, adapted to the type of vehicle (for instance a truck or passenger car), rim diameter, rim width, tyre diameter. Each tyre requires a tyre drum adapted thereto. This entails high costs.

It is an object of the invention to improve on this.

The invention thus provides an assembly comprising a tyre drum including a turn-up mechanism for use in building an unvulcanized tyre having tyre components of rubber according to claim 1.

Preferred embodiments of the invention are defined in the dependent claims.

Casings prepared for and adapted to a certain bead size can be kept in store. The assembly with the hollow shaft is adapted, particularly as regards diameter, to a smallest bead size, in one embodiment having the smallest diameter. For manufacturing tyres of a larger bead size the first casing is replaced by a second casing for the desired, larger bead size. Use is made of the possibility to utilise the free space that is available in radial outward direction. Thus one hollow shaft with related drive and control components will suffice.

It is observed that EP-A-1.145.834 discloses a tyre building drum comprising a plurality of bead lock segments that are movably supported in radial direction, seal members, and a plurality of turn-up fingers, wherein the bead lock segments, seal members and turn-up fingers are exchangeable. In case of forming green tyres having a different outer diameter, it is enough to merely exchange the bead lock segments, seal members and turn-up fingers in correspondence to the desired tyre size. The bead lock segments, seal members and turn-up fingers are supported on slide bodies, comparable to casings. EP-A-1.145.834 does not suggest exchanging sets of turn-up arms, the accompanying bead clamps and bead inner supports disposed on a casing together with said casing, as suggested by the invention.

In one embodiment the first bead size is 44.45 cm (17.5 inches), corresponding with a common smallest bead size for truck tyres.

In a further embodiment the second bead size is within the range of (over) 44.45 cm to 62.23 cm (17.5 to 24.5 inches). Thus for instance casings can be used that are adapted to 49.53 cm, 50.80 cm, 57.15 cm, 60.96 cm and 62.23 cm (19.5, 20.0, 22.5, 24.0 and 24.5 inches).

In one alternative embodiment the first bead size is 30.48 cm (12 inches), corresponding with a common smallest bead size for passenger car tyres. In a further embodiment the second bead size is within the range of (over) 30.48 cm to 48.26 cm (12 to 19 inches).

A further limitation of the number of composing parts may according to a further aspect of the invention be achieved when the bead clamps on the first and second casings comprise a uniform basic part and a first and at least one second extension piece, respectively, to be attached thereon in an exchangeable manner, wherein the first extension piece has a first radial dimension that is smaller than a second radial dimension of the second extension piece.

With the second extension pieces the diameter of the bead clamps can easily be adapted to the bead size of the tyre to be made.

In a further embodiment thereof, a circumferential rubber bead supporting ring is disposed on the extension pieces for radially inwardly biassing the bead clamps, and which at the side facing the centre plane is provided with a circumferential membrane extending in radial inward direction and secured with a radial inner end in a part that is fixed with the casing.

A further limitation of the number of composing parts may according to a further aspect of the invention be achieved when the bead inner supports comprise circumferential series of bead support levers, which in radial planes are able to hinge between a retracted inoperative position and an extended operative position, in which witch a first end they supportingly engage the inner surface of a bead, wherein the bead support levers are divided into a first lever member provided with the first end and a second lever member that is hingingly connected to the casing, wherein the first lever member and the second lever member are connected to each other so as to be able to adjust the lever length.

In this way the position of the first end of the first lever member can be adjusted in radial direction with respect to the centre line of the casing to the bead size of the tyre to be made. At least two radial inner support positions for the bead can be realised on the same casing.

In a further embodiment, with the presence of the said extension pieces for the bead clamps, it is provided that the length of the adjustability of the connection between the first and the second lever members corresponds with the difference between the first radial dimension of the first extension piece and the second radial dimension of the second extension piece.

In an embodiment of the invention, wherein the casings are provided in the manner known per se with means for moving the bead clamps in radial outward direction, wherein the bead clamps comprise basic parts that are radially slidable in a guided manner, such as between radial walls that are fixed with the casing, wherein the movement means comprise slide parts that are axially movable along the casing, wherein the basic parts and the slide parts are provided with basic surfaces and slide surfaces that are in engagement with each other and incline with respect to the centre line of the hollow shaft, according to the invention it is provided that the angle of inclination of the basic surfaces and/or the slide surfaces varies in axial direction. In this way the spatial conditions (for instance limited space in radial or axial directions) and/or the course of the radial outward forces to be realised can be anticipated.

Preferably the angle of inclination considered in process movement varies from a first value to at least one lower second value.

In one embodiment the angle of inclination of the basic surfaces increases in axial outward direction.

In a further embodiment the angle of inclination of the slide surfaces decreases in axial outward direction.

In this way it can be effected that the axial occupation of space of the (movement of) the slide parts can be kept limited. As a result there is more axial space for the movement of the sets of arms, which is necessary for tyres of smaller bead sizes, as the mutual distance of the beads is smaller and thus it must be possible that the movement of the arms takes place over a larger length.

According to an embodiment of the invention during the start of the radial expansion of the bead clamps the radial outward force on the bead clamps is at first small, as for instance only the ring tension in the circumferential, bead supporting ring needs to be overcome. Due to the change in the angle of inclination it is effected that when the ring tension in the bead itself has become larger, particularly in the end path of the expansion, the required radial outward pressure force on the bead clamps can be generated.

In a simple embodiment the basic surfaces and/or slide surfaces comprise flat surfaces, wherein preferably the basic surfaces and/or the slide surfaces comprise at least two differently inclining flat surfaces. Both the basic surfaces and the slide surfaces may comprise at least two, differently inclining flat surfaces, which are mutually oriented the same.

Preferably the first value is in the range of 35-50 degrees, preferably 40-47 degrees.

Preferably the second value is in the range of 25-35 degrees, preferably 27.5-30 degrees.

It is noted here that the slide surfaces and the basic surfaces are considered here in a plane of longitudinal section of the casings according to a line in said plane. The surfaces may be (tangentially) curved or flat in a direction transverse thereto. The slide surfaces may be provided on an uninterrupted circumferential cone ring, smoothly curved or having a series of flat surfaces. The basic surfaces can each time be provided on separate basic parts, wherein the basic parts may originate from an initially uninterrupted cone ring, divided into parts, one per turn-up arm position.

In an embodiment of the invention the second ends of the arms are detachably attached on the casing. In this way if so desired the arms can be replaced by arms of another length in radial direction or in axial direction, as a result of which more accurate adaptation to the desired tyre size, particularly the outer diameter of the tyre, is possible.

Preferably the second end of the arms forms a bearing part and a bearing for the bearing part has been arranged on the casing, wherein the bearing part can be divided, with a first member fixed with the casing and a detachable second member, due to which the replacement of the arms is simplified.

Preferably the detachable second member is situated at the in axial direction outer side of the first member. The second member preferably is attached on a retaining ring, so that the number of parts can be saved on.

The invention will be elucidated on the basis of a number of exemplary embodiments shown in the attached drawings, in which:
Figure 1 shows a schematic longitudinal section of an exemplary embodiment of a tyre building drum according to the invention, wherein the upper half is shown in an inoperative position and the lower half is shown in a turn-up position;
Figure 2 shows a detail at the location of the bead support area of the tyre building drum of figure 1;
Figures 3A-C show some schematic views of a slide mechanism for the bead area of figure 2;
Figure 4 shows a schematic view in cross-section of the bead area of figure 2, in two different set-ups; and
Figure 5 shows a cross-section of the hinge area of the arms of the tyre building drum according to figure 1.

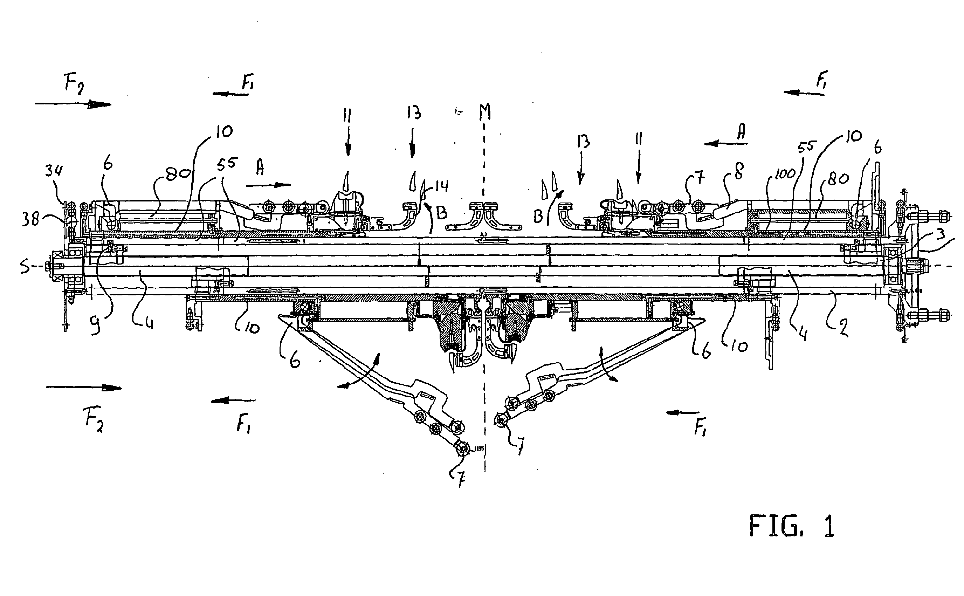

The tyre building drum 1 shown in figure 1 has a plane of symmetry M and comprises a horizontal hollow shaft 2 rotatable about a centre line S, within which shaft a spindle shaft 3 has been disposed, on which two sleeve-shaped nuts 4 have been disposed so as to be movable in the direction A. Pins 9 extend from the sleeve-shaped nuts 4 in radial direction through axially oriented slits 55 in the hollow shaft 2. On the pins 9 a casing 10 is attached which as a result is axially movable with the nut 4 in case the spindle shaft 3 is rotated. This is schematically shown with two positions, shown at the top and the bottom in the drawing, of the casings 10.

In accordance with the invention there are several casings, wherein the other pairs of casings have not been shown. They each have casings that are substantially identically shaped to the casings 10 shown, having the same inner diameter. The casings that are not shown are prepared for a certain tyre dimension, as a result of pre-mounting turn-up arms, bead clamp sections, bead inner supports, etcetera, all adapted thereto. The casings 10 are changed by at the left-hand side, the free end of the casing 1, removing the plate 34 and also the compressed air connection 38, and uncoupling the pins 9 from the casings 10 on the hollow shaft 2. The casings 10 can then both be slid off to the left (F1) from the hollow shaft 2, and other casings 10 can be shifted in the direction F2 onto the hollow shaft 2, and be connected to the pins 9. At the right-hand end a mounting part 56 is provided on the hollow shaft 2 for attachment on the machine that is not further shown, in which among others a drive for the spindle shaft 3 is present.

On each casing 10 the hinge end 6 for the turn-up arms 5 is arranged at the axial outer end, which turn-up arms 5 at their other ends are provided with a turn-up roller 7, and at a location in between are provided with an engagement for tensile bands 8 circumferential around it.

There is a cylinder assembly 80 below the arms 5, by means of which the arms 5 can be moved in axial direction with respect to the casing 10.

On either side of the centre plane M of the tyre building drum 1, in the top section of the drawing, the depicted inoperative position axially within the arms 5, particularly its turn-up rollers 7, a bead clamp section 11 with bead clamp 12, and adjacently a bead support section 13 with inner bead support 13a are shown.

The number of turn-up arms, bead clamp sections and inner bead supports may vary depending on the diameter of the tyre to be built and may for instance be twenty-four.

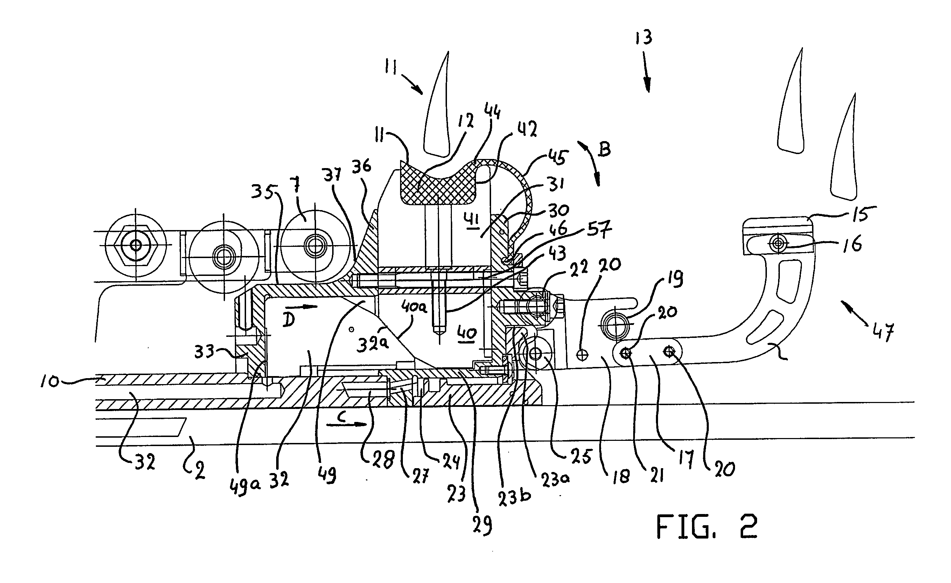

The bead clamp section 11 and the inner bead support 13 have also been arranged on the casing 10, yet, like the arms 5, are also movable with respect thereto, as will be explained on the basis of figures 2-4.

Figure 2 on the right-hand side shows the inner bead support 13, which has a lever-like build-up, with lever 47 which at its end is provided with inner bead support surface 15, which by means of bolt 16 is detachably/replaceably attached to the lever 47. The bead support lever 47 is actually two-part, having lever member 14 and lever member 18, which at the location of 17 are connected to each other by means of holes/bolts 20, 21. It can be seen that there are various holes, in this example three, as a result of which two moment-fixed positions are possible, with different lengths for the lever 47. The lever member 18 is provided with a notch through which a tension band 19 circumferential around the casing 10 may extend, in order to ensure that the lever 47 is urged back to the initial position shown.

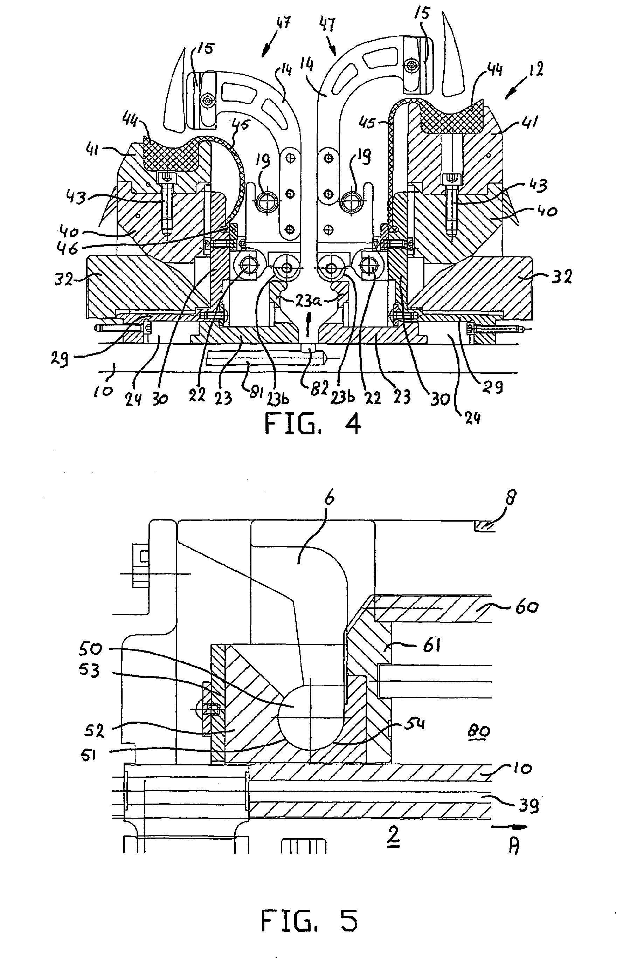

At the location of 22 the lever member 18 is hinged to a radial wall 30 that is also part of the bead support/clamp section 11. Said radial wall forms one unity with L-shaped circumferential wall 29 that extends over a slide part 23 that can be moved in the direction C over the hollow shaft 2, and defines a cylinder chamber 24 therewith (also see figure 4). Via passage 27 in L-shaped part 29 and axial passage 28 in casing 10, said cylinder chamber 24 is connected with a hydraulic or pneumatic source of pressure, not shown.

The slide part 23 is also L-shaped, wherein on its radially outwardly extending leg 23a a support is formed for a roller 25 disposed on the lever member 18, adjacent (in the inoperative position of figure 2 radially inwards) to the hinge 22.

By pressurising the cylinder chamber 24 the slide part 23 wil, as considered in the drawing, be urged to the right, and as a result so will ._' the roller 25. As the hinge 22 remains relatively stationary, the roller 25 will have to move over the leg 23a, to the radial outer surface 23b of the leg 23a. The lever 47 will in that case tilt upwards in the direction B, about hinge 22, to the extended position shown in figure 4, in which the inside of a bead can be supported by support surface 15, in axial direction towards the plane M. After operation the pressure in the cylinder chamber 24 can be let off, and the ring 19 will ensure return of the lever 47 to the position shown in figure 2.

When a tyre of another bead size has to be built, which for instance is 5.08 cm (44.45 cm against 49.53 cm) (2" (17.5" against 19.5")) smaller, the lever member 14 can be moved radially inwards over some distance by unscrewing and again tightening the bolts 21 of the connection 17, as appears from the comparison of the right-hand side of figure 4 to the left-hand side of figure 4.

In figure 2 it is furthermore shown that the bead clamp section 11, that is attached on the casing 10, comprises a radial wall 33, which with an axial wall 35 defines an inner space 49 in which a cone ring-shaped slide part 32, which is uninterrupted in circumferential direction, can be slid in the direction D. Prior to this sliding the slit space 49a, between the wall 33 and the slide part 32, situated on the left-hand side when considered in the drawing, is connected with a supply line 39 for pressure fluid. The axial wall 35 at one end is turned in an upright, radial wall 36, which is provided with a concave surface 37, along which the roller 7 of the turn-up arm 5 is guided at the start of a turn-up motion and at the end of a returning motion thereof.

The radial walls 36 and 30 define a radially oriented space 31 in which the bead clamp 12 is movable in the radial direction E. In figure 2 the bead clamp section 11 is shown in axial cross-section adjacent to the actual location of the bead clamp 12, corresponding to the top section in figure 1. In the lower part of figure 1 and in figure 4 a cross-section at the location of the bead clamp 12 is shown. In figure 2 it is indicated with bolt 57 how the walls 36 and 30 are kept at the correct mutual distance, for determining the correct width of the space 31. The bead clamp 12 is built up from a basic part 40 (one for each turn-up arm position) and an extension piece 41 detachably attached thereon by means of bolt/nut 43. The extension piece 41 is at the radial outer end provided with a recess 42, in which a circumferential rubber ring 44 is accommodated forming a support surface for the schematically shown bead. At the axial inner end the rubber ring 44 is provided with a membrane 45, which with end 46 is attached in the radial wall 30. The membrane 45 ensures gas-sealing of the annular space which during expansion of the tyre components is formed between the bead clamp sections. The compressed air necessary for that purpose enters via radial passages 82 in the casing 10, via axial compressed air line 81 (figure 4).

As shown in figure 4, by adjusting the lever 47, the extension piece 41 can also be replaced by an extension piece 41 that is less high, considered in radial direction. The extension piece 41 then remains substantially the same, only the radial dimension has changed. In the extension piece 41 a tensioning ring 44 suitable for the bead size can be accommodated.

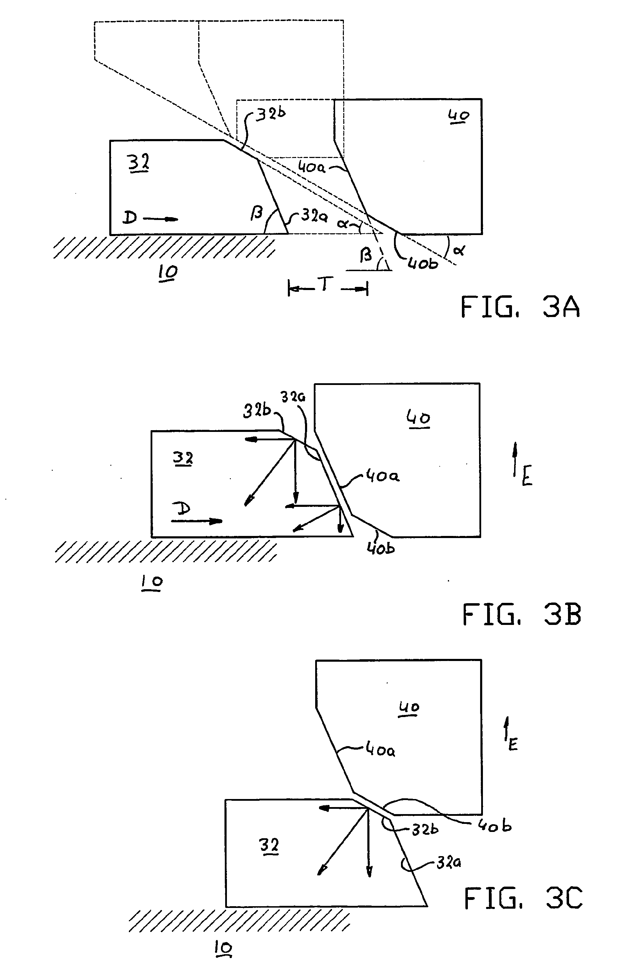

For moving the bead clamp 12 radially to the outside in the direction E, use is made of a slide part 32, which, as can be seen in figures 3A-C has two engagement surfaces 32a, 32b that are at an angle to each other. Usually the slide part 32 would have been equipped with a (in longitudinal section) single, straight engagement surface according to the direction (α) of surface 32b. The same applies to the basic part 40 (40a, 40b). Due to this intervention, according to which engagement surfaces are at different angles to the centre line S, the build-in length, as schematically shown in figure 3A can be shortened by a length T.

In figure 3B the starting situation in shown, in which the lines or surfaces 32a, 40a are placed against each other. This situation applies at the start of expanding the bead clamps 12. At a force in the direction D exerted on slide part 32 it will act substantially in axial direction on the basic part 40, with a relatively small vertical component. This is not objectionable as only the tensile force of the tensioning ring 44 needs to be overcome.

In the course of the expansion process the tension in the bead of the tyre to be made will start playing a part. The larger vertical (radial) force necessary for that purpose is realised as a result of less steep surfaces 32b and 40b being in engagement with each other. It is noted that in circumferential, tangential direction (perpendicular to paper) the surfaces 32b and 40b as regards curvature correspond with each other in the position in which the basic part 40 takes up the most radial position (and the largest force has to be exerted).

It is noted that instead of a number of surfaces connected to each other via a buckle a more even design can be used as well, for instance according to a smooth convex curvature. Particularly the shape of the engagement surfaces can be adjusted to the course of the forces to be generated/experienced.

In this example the angle α is in the range of 25-35°, preferably 27.5-30°. Angle β is in the range of 35-50°, preferably 40-47°.

The extra axial space T created is particularly advantageous when manufacturing tyres of a small bead size.

In figure 5 the hinge end 6 of the arms 5 is shown. The hinge end 6 has a circular end 50, that is accommodated in a circular bearing 51, formed by an axial inner part 54 and an axial outer part 52. The axial inner part 54 forms one unity with radial wall 61, which with axial wall 60 forms a limitation of the cylinder chamber 80. The retaining part 52 is attached in its place by means of a retaining ring 53.

When replacing the arms 5 the retaining ring 53 and the retaining part 52 are removed and the arms 5 can easily be removed, after the tensile band 8 has also been removed.

When mounting new arms 5, which for instance have a longer radial, short arm section (with hinge end 50), first the arms are laid in position by means of the tensile band 8 which keeps the arms in position all around. After that the retaining parts 52 and the retaining ring 53 are attached again.

## Claims

1. Assembly comprising a tyre drum (1) including a turn-up mechanism for use in building an unvulcanized tyre having tyre components of rubber, with reinforcement cords and two beads which either may or may not be provided with an apex, wherein the tyre drum (1) is provided with a central shaft (2), two bead clamps (12) and bead inner supports (13) placed around the shaft and axially spaced apart on either side of a centre plane of the tyre drum, means for radially expanding a part of the tyre components that is situated within the bead clamps (12), wherein the tyre drum (1) on either side outside of the bead clamps (12) is provided with a first and a second set of turn-up arms (5), respectively, wherein the arms (5) at a first free end oriented towards the bead clamps (12) are provided with a turn-up means, particularly a turn-up roller (7) or turn-up band, and at an opposite second end (6) are hinged to an arm support, wherein the tyre drum (1) is further provided with means for axially shifting the arm support in order to move the second ends of the arms of the first and second sets of arms towards each other, while having the arms (5) tilt in respective radial planes from an initial position substantially parallel to the shaft (2) to an inclined tilting position in order to move the first ends of the arms axially and radially outwards while pressing the part of the tyre components situated axially outside of the bead clamps (12) against the expanded part of the tyre components situated within the bead clamps (12), wherein the shaft (2) is designed hollow having a circumferential wall having an outer diameter, wherein each set of arms (5) with accompanying bead clamps (12) and bead inner supports (13a) is disposed on a casing (10), of which the inner diameter corresponds with the outer diameter of the circumferential wall of the hollow shaft (2), wherein the assembly comprises at least two pairs of casings, wherein the first pair of casings is adapted to a first, smallest bead size of a first tyre and the second pair of casings is adapted to a second, larger bead size of a second tyre, wherein the pairs of casings are arranged in an interchangeable manner on the hollow shaft (2).

2. Assembly according to claim 1, wherein the first bead size is 44.45 cm (17.5 inches) and the second bead size preferably is within the range of (over) 44.45 cm to 62.23 cm (17.5 to 24.5 inches).

3. Assembly according to claim 1, wherein the first bead size is 30.48 cm (12 inches), and the second bead size preferably is within the range of (over) 30.48 cm to 48.26 cm (12 to 19 inches).

4. Assembly according to claim 1, 2 or 3, wherein the bead clamps (12) on the first and second casings comprise a uniform basic part (40) and a first and at least one second extension piece (41), respectively, to be attached thereon in an exchangeable manner, wherein the first extension piece (41) has a first radial dimension that is smaller than a second radial dimension of the second extension piece (41), wherein, preferably, a circumferential rubber bead supporting ring (44) is disposed on the extension pieces (41) for radially inwardly biassing the bead clamps (12), and which preferably at the side facing the centre plane is provided with a circumferential membrane (45) extending in radial inward direction and secured with a radial inner end in a part that is fixed with the casing (10).

5. Assembly according to any one of the preceding claims, wherein the bead inner supports (13a) comprise circumferential series of bead support levers (47), which in radial planes are able to hinge between a retracted inoperative position and an extended operative position, in which with a first end they supportingly engage the inner surface of a bead, wherein the bead support levers (47) are divided into a first lever member provided with the first end and a second lever member that is hingingly connected to the casing (10), wherein the first lever member and the second lever member are connected to each other so as to be able to adjust the lever length.

6. Assembly according to claim 4 and claim 5, wherein the length of the adjustability of the connection between the first and the second lever member corresponds with the difference between the first radial dimension of the first extension piece and the second radial dimension of the second extension piece.

7. Assembly according to any one of the preceding claims, wherein the casings (10) are provided with means for moving the bead clamps (12) in radial outward direction, wherein the bead clamps (12) comprise basic parts (40) that are radially slidable in a guided manner, such as between radial walls that are fixed with the casing, wherein the movement means comprise slide parts (32) that are axially movable along the casing (10), wherein the basic parts (40) and the slide parts (32) are provided with basic surfaces (40a, b) and slide surfaces (32a, b) that are in engagement with each other and incline with respect to the centre line of the hollow shaft (2), wherein the angle of inclination of the basic surfaces and/or the slide surfaces varies in axial direction, wherein, preferably, the angle of inclination considered in process movement varies from a first value to at least one lower second value.

8. Assembly according to claim 7, wherein the angle of inclination of the basic surfaces (40a, b) increases in axial outward direction.

9. Assembly according to claim 7 or 8, wherein the angle of inclination of the slide surfaces (32a, b) decreases in axial outward direction.

10. Assembly according to claim 8 or 9, wherein the basic surfaces (40a, b) and/or slide surfaces (32a, b) comprise flat surfaces, wherein, preferably, the basic surfaces and/or the slide surfaces comprise at least two differently inclining flat surfaces, wherein, preferably, both the basic surfaces and the slide surfaces comprise at least two, differently inclining flat surfaces, which are mutually oriented the same.

11. Assembly according to claim 7, wherein the first value is in the range of 35-50 degrees, preferably 40-47 degrees.

12. Assembly according to claim 7, wherein the second value is in the range of 25-35 degrees, preferably 27.5-30 degrees.

13. Assembly according to any one of the preceding claims, wherein the second ends of the arms (5) are detachably attached on the casing (10), wherein, preferably, the second end of the arms forms a bearing part and a bearing for the bearing part has been arranged on the casing, wherein the bearing part can be divided, with a first member fixed with the casing and a detachable second member, wherein, preferably, the detachable second member is situated at the in axial direction outer side of the first member, wherein, preferably, the second member is attached on a retaining ring (53).

## Patentansprüche

1. Anordnung umfassend eine Reifentrommel (1), die einen Umschlagmechanismus zur Verwendung beim Bau eines unvulkanisierten Reifens aufweist, der Reifenbauteile aus Gummi aufweist, mit Verstärkungskorden und zwei Wulsten, die mit einem Apex versehen sein können oder nicht, wobei die Reifentrommel (1) mit einer zentralen Welle (2), zwei Wulstklemmen (12) und Wulstinnenstützen (13) versehen ist, die um die Welle herum und auf beiden Seiten einer zentralen Ebene der Reifentrommel axial beabstandet angeordnet sind, Mittel zum radialen Expandieren eines Teils der Reifenbauteile, der innerhalb der Wulstklemmen (12) angeordnet ist, wobei die Reifentrommel (1) auf beiden Seiten außerhalb der Wulstklemmen (12) mit einem ersten bzw. einem zweiten Satz von Umschlagarmen (5) versehen ist, wobei die Arme (5) an einem ersten freien Ende, das zu den Wulstklemmen (12) ausgerichtet ist, mit einem Umschlagmittel, insbesondere einer Umschlagrolle (7) oder einem Umschlagband, versehen sind, und an einem gegenüberliegenden zweiten Ende (6) scharnierartig an einer Armstütze befestigt sind, wobei die Reifentrommel (1) weiterhin mit Mitteln versehen ist, um die Armstütze axial zu verschieben, um die zweiten Enden der Arme des ersten und des zweiten Satzes von Armen aufeinander zu zu bewegen, während die Arme (5) in entsprechenden radialen Ebenen aus einer im Wesentlichen zu der Welle (2) parallelen Anfangsstellung in eine geneigte Kippstellung gekippt werden, um die ersten Enden der Arme axial und radial nach außen zu bewegen, während der Teil der Reifenbauteile, der axial außerhalb der Wulstklemmen (12) angeordnet ist, gegen den expandierten Teil der Reifenbauteile gedrückt wird, der innerhalb der Wulstklemmen (12) angeordnet ist, wobei die Welle (2) hohl konstruiert ist und eine Umfangswand mit einem Außendurchmesser hat, wobei jeder Satz von Armen (5) mit zugehörigen Wulstklemmen (12) und Wulstinnenstützen (13a) an einem Gehäuse (10) angeordnet ist, dessen Innendurchmesser dem Außendurchmesser der Umfangswand der hohlen Welle (2) entspricht, wobei die Anordnung wenigstens zwei Paar Gehäuse umfasst, wobei das erste Paar Gehäuse an eine erste, kleinste Wulstgröße eines ersten Reifens und das zweite Paar Gehäuse an ein zweite, größere Wulstgröße eines zweiten Reifens angepasst ist, wobei die Gehäusepaare austauschbar an der hohlen Welle (2) angeordnet sind.

2. Anordnung nach Anspruch 1, bei der die erste Wulstgröße 44,45 cm (17,5 Inch) beträgt und die zweite Wulstgröße bevorzugt im Bereich von (über) 44,45 cm bis 62,23 cm (17,5 bis 24,5 Inch) liegt.

3. Anordnung nach Anspruch 1, bei der die erste Wulstgröße 30,48 cm (12 Inch) beträgt und die zweite Wulstgröße bevorzugt im Bereich von (über) 30,48 cm bis 48,26 cm (12 bis 19 Inch) liegt.

4. Anordnung nach Anspruch 1, 2 oder 3, bei der die Wulstklemmen (12) an dem ersten und dem zweiten Gehäuse einen gleichförmigen Basisteil (40) und ein erstes bzw. wenigstens ein zweites Verlängerungsstück (41) bilden, das austauschbar daran angebracht wird, wobei das erste Verlängerungsstück (41) eine erste radiale Dimension hat, die kleiner als eine zweite radiale Dimension des zweiten Verlängerungsstücks (41) ist, wobei bevorzugt ein Umfangs-Gummiwulststützring (44) an den Verlängerungsstücken (41) angeordnet ist, um die Wulstklemmen (12) radial einwärts zu neigen, der bevorzugt an der Seite, die der zentralen Ebene zugewandt ist, mit einer Umfangsmembran (45) versehen ist, die sich radial nach innen erstreckt und mit einem radialen inneren Ende in einem Teil, der an dem Gehäuse (10) befestigt ist, angebracht ist.

5. Anordnung nach einem der vorigen Ansprüche, bei der die Wulstinnenstützen (13a) in Umfangsrichtung angeordnete Reihen von Wulststützhebeln (47) umfassen, die sich in radialen Ebenen scharnierartig zwischen einer zurückgezogenen inoperativen Stellung und einer ausgefahrenen operativen Stellung bewegen können, wobei sie mit einem ersten Ende stützend an der Innenfläche eines Wulstes angreifen, wobei die Wulststützhebel (47) in ein erstes Hebelglied, das mit dem ersten Ende versehen ist, und ein zweites Hebelglied unterteilt sind, das schanierartig mit dem Gehäuse (10) verbunden ist, wobei das erste Hebelglied und das zweite Hebelglied so miteinander verbunden sind, dass sie die Hebellänge einstellen können.

6. Anordnung nach Anspruch 4 und Anspruch 5, bei der die Länge der Einstellbarkeit der Verbindung zwischen dem ersten und dem zweiten Hebelglied der Differenz zwischen der ersten radialen Dimension des ersten Verlängerungsstücks und der zweiten radialen Dimension des zweiten Verlängerungsstücks entspricht.

7. Anordnung nach einem der vorigen Ansprüche, bei der die Gehäuse (10) mit Mitteln zum Bewegen der Wulstklemmen (12) in radialer Auswärtsrichtung versehen sind, wobei die Wulstklemmen (12) Basisteile (40) umfassen, die geführt radial gleiten können, beispielsweise zwischen radialen Wänden, die mit dem Gehäuse verbunden sind, wobei die Bewegungsmittel Gleitteile (32) umfassen, die axial entlang dem Gehäuse (10) bewegbar sind, wobei die Basisteile (40) und die Gleitteile (32) mit Basisflächen (40a, b) und Gleitflächen (32a, b) versehen sind, die aneinander angreifen und bezüglich der Mittellinie der hohlen Welle (2) geneigt sind, wobei der Neigungswinkel der Basisflächen und/oder der Gleitflächen in axialer Richtung variiert, wobei bevorzugt der bei dem Bewegungsvorgang berücksichtigte Neigungswinkel von einem ersten Wert bis zu wenigstens einem niedrigeren zweiten Wert variiert.

8. Anordnung nach Anspruch 7, bei der der Neigungswinkel der Basisflächen (40a, b) sich in axialer Auswärtsrichtung erhöht.

9. Anordnung nach Anspruch 7 oder 8, bei der der Neigungswinkel der Gleitflächen (32a, b) sich in axialer Auswärtsrichtung verringert.

10. Anordnung nach Anspruch 8 oder 9, bei der die Basisflächen (40a, 40b) und/oder Gleitflächen (32a, b) flache Flächen umfassen, wobei bevorzugt die Basisflächen und/oder die Gleitflächen wenigstens zwei unterschiedlich geneigte flache Flächen umfassen, wobei bevorzugt sowohl die Basisflächen als auch die Gleitflächen wenigstens zwei unterschiedlich geneigte flache Flächen umfassen, die jeweils gleich zueinander ausgerichtet sind.

11. Anordnung nach Anspruch 7, bei der der erste Wert im Bereich von 35-50 Grad liegt, bevorzugt 40-47 Grad.

12. Anordnung nach Anspruch 7, bei der der zweite Wert im Bereich von 25-35 Grad liegt, bevorzugt 27,5-30 Grad.

13. Anordnung nach einem der vorigen Ansprüche, bei der die zweiten Enden der Arme (5) abnehmbar an dem Gehäuse (10) angebracht sind, wobei bevorzugt das zweite Ende der Arme einen Lagerteil bildet und ein Lager für den Lagerteil an dem Gehäuse angeordnet ist, wobei der Lagerteil in ein erstes Glied, das an dem Gehäuse befestigt ist, und ein abnehmbares zweites Glied geteilt werden kann, wobei bevorzugt das abnehmbare zweite Glied an der in axialer Richtung äußeren Seite des ersten Glieds angeordnet ist, wobei bevorzugt das zweite Glied an einem Rückhaltering (53) angebracht ist.

## Revendications

1. Ensemble comprenant un tambour de pneumatique (1) comprenant un mécanisme de retournement destiné à être utilisé dans la fabrication d'un pneumatique non vulcanisé comprenant des composants de pneumatique de caoutchouc, avec des câbles de renforcement et deux bourrelets pouvant être dotés d'un sommet ou non, dans lequel le tambour de pneumatique (1) est doté d'un axe central (2), de deux fixations de bourrelet (12) et de supports intérieurs de bourrelet (13) placés autour de l'axe et espacés axialement d'un côté d'un plan central du tambour de pneumatique, des moyens permettant de dilater radialement une partie des composants du pneumatique située à l'intérieur des fixations de bourrelet (12), dans lequel le tambour de pneumatique (1) d'un côté situé à l'extérieur des fixations de bourrelet (12) est doté de premier et second ensembles de bras de retournement (5), respectivement, dans lequel les bras (5), au niveau d'une première extrémité libre orientée vers les fixations de bourrelet (12), sont dotés d'un moyen de retournement, en particulier un rouleau de retournement (7) ou d'une bande de retournement, et au niveau d'une seconde extrémité opposée (6), sont articulés à un support de bras, dans lequel le tambour de pneumatique (1) est également doté d'un moyen permettant de déplacer axialement le support de bras de façon à déplacer les secondes extrémités des bras des premier et second ensembles de bras l'une vers l'autre, pendant que les bras (5) s'inclinent dans des plans radiaux respectifs à partir d'une position initiale sensiblement parallèle à l'axe (2) à une position d'inclinaison inclinée afin de déplacer les premières extrémités des bras axialement et radialement vers l'extérieur tout en appuyant la partie des composants du pneumatique situés axialement à l'extérieur des fixations de bourrelet (12) contre la partie dilatée des composants de pneumatique situés à l'intérieur des fixations de bourrelet (12), dans lequel l'axe (2) est conçu pour être creux avec une paroi circonférentielle ayant un diamètre extérieur, dans lequel chaque ensemble de bras (5) avec les fixations de bourrelet (12) et les supports intérieurs de bourrelet (13a) joints est disposé sur un boîtier (10) dont le diamètre intérieur correspond au diamètre extérieur de la paroi circonférentielle de l'axe creux (2), dans lequel l'ensemble comprend au moins deux paires de boîtiers, dans lequel la première paire de boîtiers est adaptée à une première taille de bourrelet la plus petite d'un premier pneumatique et la seconde paire de boîtiers est adaptée à une seconde taille de bourrelet plus grande d'un second pneumatique, dans lequel les paires de boîtiers sont agencées de façon interchangeable sur l'axe creux (2).

2. Ensemble selon la revendication 1, dans lequel la première taille de bourrelet est de 44,45 cm (17,5 pouces) et la seconde taille de bourrelet est de préférence dans la plage de (plus de) 44,45 cm à 62,23 cm (17,5 à 24,5 pouces).

3. Ensemble selon la revendication 1, dans lequel la première taille de bourrelet est de 30,48 cm (12 pouces) et la seconde taille de bourrelet est de préférence dans la plage de (plus de) 30,48 cm à 48,26 cm (12 à 19 pouces).

4. Ensemble selon la revendication 1, 2 ou 3, dans lequel les fixations de bourrelet (12) sur les premier et second boîtiers comprennent la fixation sur ceux-ci d'une partie de base uniforme (40) et une première et au moins une seconde parties d'extension (41), respectivement, de façon échangeable, dans lequel la première partie d'extension (41) a une première dimension radiale inférieure à une seconde dimension radiale de la seconde partie d'extension (41), dans lequel, de préférence, un anneau circonférentiel de support de bourrelet en caoutchouc (44) est disposé sur les parties d'extension (41) pour pousser radialement vers l'intérieur les fixations de bourrelet (12) et doté de préférence sur le côté orienté vers le plan central d'une membrane circonférentielle (45) s'étendant dans une direction radiale vers l'intérieur et fixée avec une extrémité radiale dans une partie fixée au boîtier (10).

5. Ensemble selon l'une quelconque des revendications précédentes, dans lequel les supports intérieurs de bourrelet (13a) comprennent une série circonférentielle de leviers de support de bourrelet (47), qui dans des plans initiaux, peuvent être articulés entre une position rétractée non opérationnelle et une position opérationnelle étendue, dans laquelle, avec une première extrémité, ils s'accouplent par support avec la surface intérieure d'un bourrelet, dans lequel les leviers de support de bourrelet (47) sont divisés entre un premier élément de levier doté de la première extrémité et un second élément de levier raccordé de façon articulée au boîtier (10), dans lequel le premier élément de levier et le second élément de levier sont raccordés l'un à l'autre de façon à pouvoir ajuster la longueur du levier.

6. Ensemble selon la revendication 4 ou la revendication 5, dans lequel la longueur de l'ajustabilité du raccordement entre les premier et second éléments de levier correspond à la différence entre la première dimension radiale de la première partie d'extension et la seconde dimension radiale de la seconde partie d'extension.

7. Ensemble selon l'une quelconque des revendications précédentes, dans lequel les boîtiers (10) sont dotés de moyens destinés à déplacer les fixations de bourrelet (12) dans une direction radiale vers l'extérieur, dans lequel les fixations de bourrelet (12) comprennent des parties de base (40) coulissantes radialement de façon guidée, comme entre les parois radiales fixées avec le boîtier, dans lequel les moyens de mouvement comprennent des parties de coulissement (32) mobiles axialement le long du boîtier (10), dans lequel les parties de base (40) et les parties de coulissement (32) sont dotées de surfaces de base (40a, b) et de surfaces de coulissement (32a, b) en accouplement les unes avec les autres et inclinées par rapport à la ligne centrale de l'axe creux (2), dans lequel l'angle d'inclinaison des surfaces de base et/ou des surfaces de coulissement varie dans la direction axiale, dans lequel, de préférence, l'angle d'inclinaison considéré dans le mouvement varie d'une première valeur à au moins une seconde valeur inférieure.

8. Ensemble selon la revendication 7, dans lequel l'angle d'inclinaison des surfaces de base (40a, b) augmente dans la direction axiale vers l'extérieur.

9. Ensemble selon la revendication 7 ou 8, dans lequel l'angle d'inclinaison des surfaces de coulissement (32a, b) diminue dans la direction axiale vers l'extérieur.

10. Ensemble selon la revendication 8 ou 9, dans lequel les surfaces de base (40a, b) et/ou les surfaces de coulissement (32a, b) comprennent des surfaces plates, dans lequel, de préférence, les surfaces de base et/ou les surfaces de coulissement comprennent au moins deux surfaces plates d'inclinaison différente, dans lequel, de préférence, les surfaces de base et les surfaces de coulissement comprennent au moins deux surfaces plates d'inclinaison différente, mutuellement orientées de façon identique.

11. Ensemble selon la revendication 7, dans lequel la première valeur se situe dans la plage allant de 35 à 50 degrés, de préférence 40 à 47 degrés.

12. Ensemble selon la revendication 7, dans lequel la seconde valeur se situe dans la plage allant de 25 à 35 degrés, de préférence 27,5 à 30 degrés.

13. Ensemble selon l'une quelconque des revendications précédentes, dans lequel les secondes extrémités des bras (5) sont fixées de façon amovible sur le boîtier (10) dans lequel, de préférence, la seconde extrémité des bras forme une partie de support et un support pour la partie de support est agencé sur le boîtier, dans lequel la partie de support peut être divisée, avec un premier élément fixé avec le boîtier et un second élément détachable, dans lequel, de préférence, le second élément détachable est situé sur le côté extérieur dans la direction axiale du premier élément, dans lequel, de préférence, le second élément est fixé sur une bague de rétention (53).
